(19) Europäisches Patentamt
European Patent Office
Office européen des brevets

(11) EP 2 611 860 B1

(12) **EUROPEAN PATENT SPECIFICATION**

(45) Date of publication and mention of the grant of the patent:
**08.08.2018 Bulletin 2018/32**

(21) Application number: **11785777.1**

(22) Date of filing: **29.08.2011**

(51) Int Cl.:
***C08L 23/02*** *(2006.01)* ***C08K 3/00*** *(2018.01)*
***C09K 21/10*** *(2006.01)*

(86) International application number:
**PCT/IB2011/002319**

(87) International publication number:
**WO 2012/028953 (08.03.2012 Gazette 2012/10)**

(54) **EXPANDED POLYOLEFIN CONTAINING POWDERED ACTIVATED CARBON**

EXPANDIERTES POLYOLEFIN MIT AKTIVIERTEM KOHLENSTOFF IN PULVERFORM

POLYOLÉFINE EXPANSÉE CONTENANT DU CHARBON ACTIVÉ EN POUDRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.08.2010 US 378149 P**
**27.06.2011 US 201161501427 P**

(43) Date of publication of application:
**10.07.2013 Bulletin 2013/28**

(73) Proprietor: **Kaneka Belgium N.V.**
**2260 Westerlo-Oevel (BE)**

(72) Inventors:
- **VAN RAVESTYN, Pierre**
  **2440 Geel (BE)**
- **LAEVEREN, Nancy**
  **2431 Laakdal (BE)**

(74) Representative: **TBK**
**Bavariaring 4-6**
**80336 München (DE)**

(56) References cited:
**JP-A- 56 055 478**
**JP-A- 2002 179 830**
**JP-A- 2006 063 340**
**JP-A- 2010 174 080**
**US-A1- 2003 105 195**
**US-A1- 2004 171 708**
**US-B2- 6 429 234**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention relates to a pre-expanded polyolefin particle according to claims 1 to 7 containing powdered activated carbon, commonly referred to by the acronym PAC, and a sterically hindered amine ether flame retardant.

Preferably, the polyolefin has as its main constituent monomer propylene, and a preferred product of the invention is therefore in the class of expanded polypropylenes (EPP).

The present invention relates to a process according to claim 8 for preparing the pre-expanded polyolefin particle of the invention, a process for producing an expanded polyolefin product according to claim 9 and also molded articles obtained therefrom according to claim 10.

## Background

The typical properties of molded articles of foamed polypropylene resin (EPP), are a high level of structural strength in relation to the weight of the article, superior chemical resistance, heat resistance, impact resistance and distortion rate after compression. Therefore EPP is widely used in a number of technical fields, for example, in cushioning packaging material, returnable containers, insulating material or bumper core of an automobile, side impact energy absorber and floor material, building materials, and parts in devices and appliances and others. However, molded articles of foamed polyolefin resins have the drawback of being flammable since polypropylene does not only act as fuel during a fire, but also each EPP foamed particle contains air, and therefore acts as a source of oxygen, consequently maintaining and supporting a fire.

In recent years, products such as automobile parts, building materials, and plastic parts in devices and appliances are strongly demanded to have flame resistance or self-extinguishing properties. More specifically, these products are required to meet specific flame resistance requirements, depending on their application. Various international standards describe a number of tests to evaluate the burning behaviour of these products. For instance, ISO 3795 or section 572.302 of the FMVSS standard describes a method to determine the flammability of interior materials of road vehicles. The outcome of both tests is a value for the horizontal burning rate of the material.

Furthermore, paragraph 12 of the UL94 standard describes the "Horizontal Burning Foamed Materials Test" which is a test method to evaluate the burning behavior of plastic foam materials used for parts in devices and appliances in non-structural applications. Provided that the test results of a material comply with certain criteria, it obtains a "HBF", "HF-2" or "HF-1" classification, which is an indication of its level of fire resistance.

As a method for imparting a flame resistance to molded articles of polyolefin resins, there are known various methods as described in JP-A-3-269029, JP-A-5-331310, JP-A-7-238178, JP-A-3-269029, JP-A-5-331310, JP-A-7-238178, JP-A-4-363341, JP-A-6-192465, JP-A-7-309967, JP-A-10-147661, JP-A-9-227711, JP 2002 179830 A, US 6 429 234 B2, US 2004/171708 A1, US 2003/105195 A1, JP 56 055478 A, JP 2006 063340 A, JP 2010 174080 A and WO2003/048239A.

On the other hand, in order to meet the requirements regarding burning behavior, a number of flame retardant additives have been identified to impart flame resistance to plastic products, like halide compounds, phosphorus compounds, metal hydroxide and others. However, many flame retardant additives have serious drawbacks. For instance, plastic resin products that contain halide flame retardant additives potentially generate harmful gasses during burning. Furthermore, phosphorous compounds and metal hydroxide inhibit good melt adhesion of the pre-expanded particles during an in-mold foaming process where pre-expanded particles are filled in a mold and are fused together by heating with steam. On top, with these compounds it is difficult to achieve good surface appearance and they are disadvantageous from the viewpoint of cost and recycling.

USP6822023 disclosed flame retardant polyolefin pre-expanded particles, made of a resin composition comprising polyolefin resin and a sterically hindered amine ether flame retardant, which can be molded with good moldability to give in-mold foamed articles which have excellent flame resistance and do not generate harmful gas at the time of burning.

JP-2003053333 demonstrated that this same sterically hindered amine ether flame retardant imparts excellent flame retarding effects to polyolefin resin expanded particles, even with a small amount of flame retardant content and despite the fact that carbon black was used as colorant.

## Summary of the invention

It has surprisingly been found, and this is the basis of the present invention, that the incorporation of powdered activated carbon (PAC) in an expanded (foamed) polyolefin such as expanded polypropylene (EPP) increases flame resistance, reducing the horizontal burning rate.

Powdered activated carbon (PAC) is a material having an exceptionally high surface area, in excess of 500 $m^2/g$, obtained by pyrolysis of carbon-based material such as wood, nutshells, peat or coal, optionally combined with

chemical activation or oxidation. PAC has a typical particle size of 1 - 150 μm.

Carbon black is a material produced by incomplete combustion of liquid aromatic hydrocarbons in an oil furnace process. The mean diameter of primary carbon black particles ranges from 8 to 300 nanometers. In the furnace, these primary carbon black particles coalesce to form larger 3-dimensional structures, named primary aggregates. The extent of aggregation can be either low or high, resulting in low structure and high structure grades respectively. The surface area of carbon black is usually around 100 $m^2/g$.

The present inventors have surprisingly found that the addition of carbon black to polyolefins such as polypropylene, unlike powdered activated carbon, does not impart a pre-expanded particle and foamed article therefrom with enhanced flame resistance so as to meet flame resistance requirements. On the contrary, the burning behavior actually worsened with respect to the expanded polyolefin product without this additive. The simple presence of a particulate carbon source is therefore not sufficient to enhance flame resistance.

Furthermore, it has surprisingly been found that the incorporation of powdered activated carbon (PAC) and a sterically hindered amine ether flame retardant in an expanded (foamed) polyolefin such as expanded polypropylene (EPP), further increases flame resistance.

Preferably, the sterically hindered amine ether flame retardant is a compound of the formula (1) :

$$R^1NHCH_2\,CH_2\,CH_2NR^2\,CH_2\,CH_2\,NR^3\,CH_2\,CH_2\,CH_2NHR^4 \qquad (1)$$

wherein $R^1$ and $R^2$ are an s-triazine moiety T of the formula (2) :

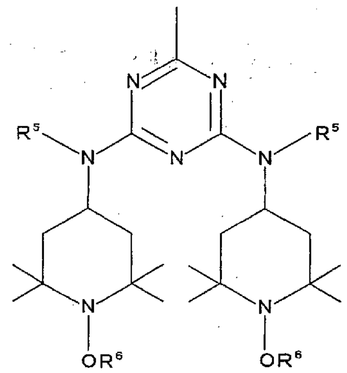

(2)

in which $R^5$ is an alkyl group having 1 to 12 carbons and $R^6$ is a methyl group, cyclohexyl group or octyl group; and either one of R3 and R4 is the s-triazine moiety T represented by the formula (2) and the other is a hydrogen atom.

The present inventors found that the incorporation of PAC in expanded (foamed) polyolefin can increase the flame resistance as mentioned above and filed a patent application as U.S. 61/378149. The property which can be achieved by the incorporation of PAC is excellent flame retardancy measured by horizontal burning rate. This property is required especially in automotive applications since the automotive industry has put in place material specifications for the burning rate. A low burning rate enables the passengers to have sufficient amount of time to leave the burning car. Today, a max burning rate of 100 mm/min is accepted for interior parts, however, there is a tendency to decrease this specification. Since safety becomes more and more important, this specification will likely decrease the max burning rate in the future.

However, there are several methods to evaluate the flame resistance property such as use of horizontal burning rate and use of damaged length in horizontal burning conditions. The present inventors have found that the flame resistance of molded articles formed of polyolefin can be drastically improved by use of PAC with a sterically hindered amine ether flame retardant as compared with that obtained by PAC or the sterically hindered amine alone. This remarkable effect was confirmed by measurement of the damaged length in horizontal burning conditions. This property is required especially in electrical devices and appliances. The risk is that due to a short circuit, the material which is part of an electrical equipment, starts to burn. For these applications it is of utmost importance that the flame spread is restrained to a minimum level since it could set a building on fire. The damaged length in horizontal burning conditions is a measure for the self-extinguishing property of a material and indicates to which extent a material allows the spreading of flames.

## Detailed description of the invention

The polyolefin resins used in the present invention are preferably homopolymers and copolymers of 75 to 100 % by weight, preferably 80 to 100 % by weight, of an acyclic monoolefin monomer and 25 to 0 % by weight, preferably

20 to 0 % by weight of other monomers copolymerizable with the acyclic monoolefin monomer. If the content of the acyclic monoolefin monomer is less than 75 % by weight, the characteristics brought from the acyclic monoolefin monomer are not sufficiently retained.

Examples of the acyclic monoolefin monomer are, for instance, $\alpha$-olefins having 2 to 12 carbon atoms, e.g., ethylene, propylene, butene-1, isobutene, pentene-3, 3-methylbutene-1, hexene-1, 4-methylpentene-1, 3,4-dimethylbutene-1, heptene-1, 3-methylhexene-1, octene-1 and decene-1. The acyclic monoolefins may be used alone or in mixtures thereof.

Examples of the other monomers copolymerizable with the acyclic monoolefin monomer are, for instance, a cyclic olefin such as cyclopentene, norbornene or 1,4,5,8-dimethno-1,2,3,4,4a,8,8a,6-octahydronaphthalene, 5-methylene-2-norbornene, 5-ethylidene-2-norbornene, or a diene such as 1,4-hexadiene, methyl-1,4-hexadiene or 7-methyl-1,6-octadiene, and the like. The other copolymerizable monomers may be used alone or in mixtures thereof.

Examples of the polyolefin resins prepared from the above-mentioned acyclic monoolefin monomer and other monomers copolymerizable therewith are, for instance, polyethylene resins such as high density polyethylene, medium density polyethylene, low density polyethylene and linear low density polyethylene; polypropylene resins such as propylene homopolymer and ethylene-propylene copolymer (e.g., copolymer of 1 to 15 % by weight of ethylene and 99 to 85 % by weight of propylene); copolymers of ethylene and/or propylene with other monomers such as propylene-butene copolymer, ethylene-propylene-butene copolymer and ethylene-propylene-diene copolymer; polybutene; polypentene; and the like. Of these, low density polyethylene, linear low density polyethylene, ethylene-propylene random copolymer having an ethylene content of 1 to 15 % by weight and a propylene content of 99 to 85 % by weight and ethylene-propylene-butene copolymer are preferred from the viewpoint that pre-expanded particles having a uniform closed cell structure are easily obtained.
The polyolefin resins may be used alone or in mixtures thereof.

It is preferable that the polyolefin resins have a melt index (MI) of 0.1 to 50 g/10 minutes, especially 0.3 to 40 g/10 minutes. If the MI of the polyolefin resins is less than 0.1 g/10 minutes, the fluidity of the resins at the time of foaming is poor and the foaming is difficult. If the MI is more than 50 g/10 minutes, it is difficult to achieve a high expansion ratio since the fluidity is excessively high and, also, the pre-expanded particles tend to easily shrink after foaming.
MI can be measured in accordance with ASTM D1238 or ISO 1133.

In the present invention, another thermoplastic polymer such as a polymer containing a carboxyl group such as ethylene-acrylic acid-maleic anhydride terpolymer, ethylene-(meth)acrylic acid copolymer or ionomer resin prepared by crosslinking ethylene-(meth)acrylic acid copolymer with metal ion; polyamide such as nylon 6, nylon 6,6 or copolymerized nylon and thermoplastic polyester elastomer such as a block copolymer of polybutylene terephthalate and polytetramethylene glycol may be used with the polyolefin resin.

The expanded polyolefin products of the present invention do contain as an additive powdered activated carbon (PAC). PAC used in the present invention is manufactured from solid organic raw material such as wood, nutshells, peat or coal. These are activated by steam or a chemical process, resulting in a highly porous material and having high surface area and a function as a carbonaceous adsorbent. PAC has a typical particle size of 1 - 150 $\mu$m. PAC used in this invention is not limited, but it is preferred that the median particle size is 1 - 10$\mu$m. Preferably, PAC has a typical internal surface area of 500 up to 1500 $m^2/g$. PAC described above is commercially available, for example, as "NORIT PAC" (produced by Norit), "NUCHAR" (produced by Mead West Vaco), "YAO" and "NV5" (produced by Eurocarb).
It is preferred in the present invention that the percentage by weight of powdered activated carbon (PAC) added with respect to 100% by weight of total product, is 0.1 to 15% by weight, more preferably 0.5 to 12% by weight.

In the present invention, a sterically hindered amine ether flame retardant in combination with PAC is used. Use of both the sterically hindered amine ether flame retardant and the PAC further enhances flame retardancy and provides the foamed article with the excellent flame retardancy evaluated by measurement of the damaged length in horizontal burning conditions.

The preferred sterically hindered amine ether flame retardant used in the present invention are for instance compounds of the formula (1) :

$$R^1NHCH_2\ CH_2\ CH_2NR^2\ CH_2\ CH_2\ NR^3\ CH_2\ CH_2\ CH_2NHR^4 \qquad (1)$$

wherein $R^1$ and $R^2$ are an s-triazine moiety T of the formula (2) :

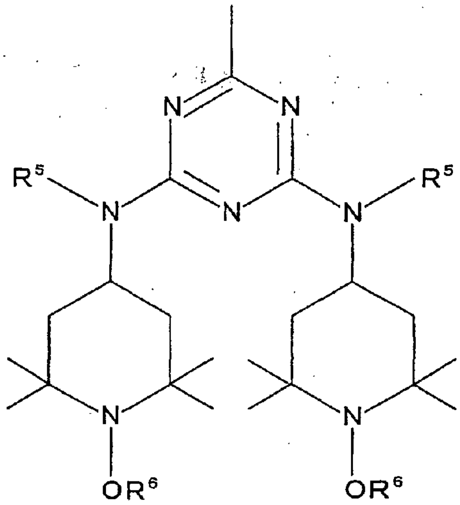

(2)

in which $R^5$ is an alkyl group having 1 to 12 carbons such as methyl group, ethyl group, propyl group, butyl group, n-pentyl group, n-hexyl group, nonyl group, decyl group, undecyl group, dodecyl group, isopropyl group, isobutyl group, sec-butyl group, tert-butyl group, 2-ethylbutyl roup, isopentyl group, 1-methylpentyl group, 1,3-dimethylbutyl group, 1-methylhexyl group, isoheptyl group, 1,1,3,3-tetramethylpentyl group, 1-methylundecyl group or 1,1,3,3,5,5-hexamethylhexyl group, and $R^6$ is a methyl group, cyclohexyl group or octyl group; and either one of R3 and R4 is the s-triazine moiety T represented by the formula (2) and the other is a hydrogen atom. The sterically hindered amine ether flame retardants may be used alone or in admixture thereof.

Examples of the s-triazine moiety T represented by the formula (2) are, for instance, 2,4-bis[(1-methoxy-2,2,6,6-tetramethylpiperidine-4-yl)n-butylamino]-s-triazine, 2,4-bis[(1-cylcohexyloxy-2,2,6,6-tetramethylpiperidine-4-yl)n-butylamino]-s-triazine, 2,4-bis[(1-octyloxy-2,2,6,6-tetramethylpiperidine-4-yl)n-butylamino]-s-triazine, and the like.

Examples of the sterically hindered amine ether flame retardant (1) are, for instance, N,N',N'''-tris{2,4-bis[(1-cyclohexyloxy-2,2,6,6-tetramethylpiperidine-4-yl)n-butylamino]-s-triazine-6-yl}-3,3'-ethylenediiminodipropylamine, N,N',N"-tris{2,4-bis[(1-cyclohexyloxy-2,2,6,6-tetramethylpiperidine-4-yl)n-butylamino]-s-triazine-6-yl}-3,3'-ethylenediiminodipropylamine, N,N',N'''-tris{2,4-bis[(1-octyloxy-2,2,6,6-tetramethylpiperidine-4-yl)n-butylamino]-s-triazine-6-yl}-3,3'-ethylenediiminodipropylamine, N,N',N"-tris{2,4-bis[(1-octyloxy-2,2,6,6-tetramethylpiperidine-4-yl)n-butylamino]-s-triazine-6-yl}-3,3'-ethylene-diiminodipropylamine, N,N',N'''-tris{2,4-bis[(1-methoxy-2,2,6,6-tetramethylpiperidine-4-yl)n-butylamino]-s-triazine-6-yl}-3,3'-ethylenediiminodipropylamine, N,N',N"-tris{2,4-bis[(1-methoxy-2,2,6,6-tetramethylpiperidine-4-yl)n-butylamino]-s-triazine-6-yl}-3,3'-ethylenediiminodipropylamine. The sterically hindered amine ether flame retardants may be used alone or in admixture thereof.

The sterically hindered amine ether flame retardant is generally used in an amount of 0.01 to 20% by weight, with respect to 100% by weight of the total components.

In addition to the powdered activated carbon (PAC), other known additives for expanded polyolefin materials can also be added. These include dyes, pigments, nucleating agents, stabilizers, flame retardants other than PAC, lubricants and antistatics, as well as waxes. The flame retardants above described do not include the sterically hindered amine ether flame retardant.

Nucleating agents facilitate foaming and allow cell diameters to be controlled, in particular to reduce cell diameter. Nucleating agents that can be used in the present invention include mica, talc, a sodium bicarbonate-citrate mixture, as well as other inorganic species such as pyrogenic silica, natural or synthetic zeolites and (optionally modified) betonites. Organic materials such as paraffins and waxes can also have nucleating effects.

Although the use of powdered activated carbon or use of PAC with the sterically hindered amine ether flame retardant has been found by the present inventors to have flame retardant effect, it is possible to add further, conventional flame retardants to the composition of the present invention.

As a flame retardant, various types of compounds can be used, such as brominated compounds including brominated aliphatic compounds, brominated aromatic compounds, or brominated phosphoric esters, or brominated polymers. The corresponding chlorinated series can also be used. Further known are phosphorus-based compounds such as phosphoric esters, phosphates, polyphosphate salts, nitrogen phosphorous and red phosphorus. Amino compound such as melamine formaldehyde, amino phosphate can be used. Silicone oils, and other silicon compounds, such as silicon polymers, silicone elastomers, and silica gel can be used. Inorganic compounds, such as antimony oxide, metal hydroxide, a metallic oxide, metallic carbonate, boron oxide, borate salt, and black lead, can also be used. Combinations of these flame retardants can be used.

Examples of brominated compounds include: hexabromocyclododecane, tris (2,3-dibromopropyl)phosphate, tris (2,3-dibromopropyl)isocyanurate, tetrabromovinyl-cyclohexane, tetrabromo cyclooctane, pentabromocyclohexane, a hexabromo-2-butene, tetrabromo nonane, hexabromobenzene, octabromodiphenyl ether, decabromodiphenyl ether, tribromophenol, tetrabromo dihydroxydiphenylmethane, dibromoneopentylglycol diglycidyl ether, dibromo phenyl glycidyl ether, tetrabromobisphenol A and tetrabromobisphenol A-JI (2,3-dibromopropyl ether), tetrabromobisphenol A-JI (glycidyl ether), tetrabromobisphenol S, an ethylenebis tetra bromine phthalimide, brominated polystyrene.

Inorganic flame retardant additives include antimonous oxide, antimony pentoxide, aluminium hydroxide, magnesium hydroxide, a calcium oxide, an aluminum oxide, magnesium oxide, zinc oxide, titanium oxide, tin oxide, a tin oxide hydrate, calcium carbonate, magnesium carbonate, boron oxide, boric acid, zinc borate, boric acid barium, barium metaboric acid, black lead.

The pre-expanded particles of the present invention can be prepared from the polyolefin resin composition containing the sterically hindered amine ether flame retardant and PAC in a known manner. For example, the pre-expanded particles can be prepared by melt-kneading a polyolefin resin with the flame retardant and PAC and optionally additives, forming the resulting mixture to resin particles, impregnating the resin particles with a volatile blowing agent in an aqueous dispersion medium with stirring under high temperature and high pressure conditions, and releasing the aqueous dispersion into a low pressure zone to thereby expand the particles. The bulk density of the produced pre-expanded particles is preferably from 10 to 200 g/L, especially 20 to 60 g/L, though it varies depending on the presence or absence of fillers used optionally and the density of the resin used. The expansion ratio of the pre-expanded particles is usually from 3 to 90, especially from about 5 to about 60. It is preferable that the proportion of closed cells in the pre-expanded particles is not less than 65%, especially not less than 80%. It is also preferable that the average cell diameter is from 50 to 1000 $\mu$m, especially 100 to 800 $\mu$m. It is preferable that an average particle size of the pre-expanded particles is 0.1 to 10 mm, especially 1 to 10 mm.

It is further preferable that, in addition to the characteristics as mentioned above, the pre-expanded particles of the present invention show two fusion peaks on a DSC curve when measured by differential scanning calorimetry (DSC) and the heat of fusion QH of the peak appearing on the higher temperature side is from 1.5 to 25.0 J/g. As a result of having two fusion peak temperatures, the pre-expanded particles can be molded without crosslinking the polyolefin resin. If the heat of fusion QH is less than 1.5 J/g, the dimensional shrinkage of molded articles becomes large and also the mechanical properties of molded articles such as compressive strength are lowered. If the heat of fusion is more than 25.0 J/g, the surface property of molded articles is deteriorated and the internal melt adhesion is also deteriorated to result in lowering of mechanical properties. In particular, in case of using a polypropylene resin as a polyolefin resin, it is preferable that the heat of fusion QH is from 1.5 to 25 J/g, especially 5.0 to 20.0 J/g, more especially 8.0 to 18.0 J/g.

The pre-expanded particles of the present invention preferably show two fusion peak temperatures measured by DSC method. No particular limitation is required for the relationship between these two fusion peak temperatures. However, it is preferable that the difference in temperature between these two fusion peaks is from 10 to 25° C, since the pre-expanded particles are easily fused together when heated for molding in a mold. Although the two fusion peak temperatures vary depending on molecular structure of the base resin, thermal history of the resin, amount of blowing agent, expansion temperature and expansion pressure, the difference between the two fusion peak temperatures becomes large if the expansion is conducted on a higher temperature side.

The two fusion peaks appearing on a DSC curve of pre-expanded particles are produced by a change of crystal state of the base resin that occurs when, upon expansion of resin particles, the base resin is heated to a temperature in the vicinity of the melting point of the resin and then quenched. As a result, pre-expanded particles are obtained having two fusion peak temperatures.

Although the heat of fusion QH for the high-temperature-side peak of the pre-expanded particles varies depending on the molecular structure of resin and the amount of additives, the heat of fusion QH generally decreases with raising the expansion temperature. Pre-expanded particles having a heat of fusion QH of 1.5 to 25.0 J/g can be easily obtained by the above-mentioned method of the preparation of pre-expanded particles if the heating temperature for the pre-expansion is set within the range of from (Tm-25)°C to (Tm+10)°C wherein Tm is the melting point (°C) of the particles of a base resin (i.e., polyolefin resin). The reason why the expansion temperature is set within the above range is that it is possible to suitably select an optimum expansion temperature in accordance with the kind of polyolefin resin, the amount of blowing agent used and the desired expansion ratio of pre-expanded particles.

Processes for preparing the flame retardant polyolefin pre-expanded particles will be explained below.

The polyolefin resin is usually processed into a desired particulate shape so as to make it easier to use in pre-expansion, for example, by melting in extruder, kneader, Banbury mixer or roll mill, and forming into particles having a desired shape, such as column, prolate spheroid, sphere, cube or rectangular parallelepiped and having an average particle size of 0.1 to 10 mm, preferably 0.7 to 5 mm. PAC and optionally used additives are added to the molten resin in the step of preparing the resin particles. The sterically hindered amine ether flame retardant used along with PAC also can be added in this process.

The process for preparing the polyolefin pre-expanded particles of the present invention is not particularly limited, and known processes are applicable. For example, the pre-expanded particles are produced by a process which comprises dispersing the polyolefin resin particles in an aqueous dispersion medium, typically water, in a pressure vessel to form a dispersion, impregnating the particles with a blowing agent with stirring, heating the dispersion under pressure to a prescribed expansion temperature, and releasing the dispersion into a low pressure zone to thereby expand the particles.

In order to achieve the expansion, volatile blowing agents are used, and can be incorporated by different means. Concerning the chemical nature of the blowing agent, various types of blowing agents are known.

One class of blowing agent is hydrocarbons, which can be linear alkanes such as butane, pentane, hexane, or heptane, or cycloalkanes such as cyclobutane, cyclopentane, or cyclohexane. Halogenated hydrocarbons can be used including chlorodifluoromethane, dichloromethane, dichlorofluoromethane, chloroethane, and dichlorotrifluoroethane. It is also possible to use alkanols, such as methanol, ethanol, n-propanol, isopropanol or n-butanol. Ketones are also known as blowing agents, such as 3,3-dimethyl-2-butanone and 4-methyl-2-pentanone. The use of ethers and esters is also known. Blowing agents which are gases at room temperature such as carbon dioxide, air, nitrogen or noble gases can be used. Mixtures of the above-mentioned blowing agents can be used.

The amount of the blowing agent is not particularly limited, and is suitably selected according to a desired degree of expansion of the pre-expanded particles to be produced. However, the blowing agent is generally used in an amount of 5 to 50 parts by weight per 100 parts by weight of the polyolefin resin particles.

In the preparation of an aqueous dispersion of polyolefin particles, a dispersing agent such as calcium tertiary phosphate, basic magnesium carbonate or calcium carbonate may be used. A small amount of a surfactant such as sodium dodecylbenzenesulfonate, sodium n-paraffinsulfonate or sodium $\alpha$-olefinsulfonate may also be used as a dispersing aid. These may be used alone or in mixtures thereof. The amounts of such dispersing agent and surfactant vary depending on the kinds thereof and the kind and amount of the polyolefin particles used. Usually the amount of dispersing agent is from 0.2 to 3 parts by weight per 100 parts by weight of water, and the amount of surfactant is from 0.001 to 0.1 part by weight per 100 parts by weight of water. The polyolefin particles to be dispersed into an aqueous dispersion medium such as water are generally used in an amount of 20 - 100 parts by weight per 100 parts by weight of water in order to achieve good dispersion into water.

Usually the polyolefin particles are introduced into a pressure vessel with water and a blowing agent to form an aqueous dispersion of the particles, and impregnated with the blowing agent at an elevated temperature, e.g., a temperature higher than the softening point of the polyolefin resin used. This temperature is preferably between 100°C and 170°C. The dispersion of the particles containing a blowing agent is then heated under pressure to an expansion temperature in the pressure vessel, and then released from the vessel into an atmosphere of lower pressure through an orifice having openings with a diameter of 2 to 10 mm, thereby expanding the polyolefin resin particles to give the polyolefin pre-expanded particles of the present invention.

The expansion temperature is generally from 110 to 160°C.

The expansion pressure is selected primarily according to the prescribed expansion ratio, and is generally from 5 to 50 bar.

There is no particular limitation in the pressure vessel used, and any vessel can be used so long as it can withstand the pressures and temperatures noted above.

A representative vessel is an autoclave type pressure vessel.

In an alternative extrusion-foaming process, the polyolefin product is melted at a temperature of 120 to 240 °C in a vessel. After a residence time of 1 to 90 minutes, the material is extruded through a die with expansion and is then granulated.

The expanded polyolefin products of the present invention may contain various additives which may be incorporated in the polyolefin at various stages. For example, it is possible to incorporate additives at the same time as the expansion by the blowing agent in the impregnation process involving suspended granules of polyolefin. It is also possible to carry out a specific extrusion process to incorporate additives, either simultaneously with or prior to expansion with a blowing agent.

In a preferred process according to the present invention, the powdered activated carbon (PAC) is incorporated into granules of polyolefin with melting in an extruder. The sterically hindered amine ether flame retardant being used, also can be incorporated. Following this, the material comprising polyolefin and PAC (or comprising both) is extruded and then converted into small pellets. The small pellets are then subjected to an expansion process, at a pressure of 5 to 50 bars and at a temperature of 100 to 170°C.

Suspension aids can be used such as tricalciumphosphate, magnesium pyrophosphate, metal carbonates. Other possibilites are polyvinyl alcohol and sulfonate-based surfactants. These materials facilitate the dispersion of the polyolefin granulate in the reactor.

Known methods may be used for in-mold foaming of the polyolefin resin pre-expanded particles of the present invention. Examples thereof include (1) a method that directly uses the pre-expanded particles; (2) a method that imparts foaming

ability by injecting inorganic gas, such as air, into the pre-expanded articles in advance; and (3) a method that fills a mold with pre-expanded particles in a compressed state.

One example of the method for forming an in-mold foamed article from the olefin resin pre-expanded particles of the present invention includes air-compressing the pre-expanded particles in a pressure vessel in advance to inject air into the particles to thereby impart the foaming ability, filling a mold that can enclose but cannot hermetically seal its interior with the pre-expanded particles, molding the particles with a heating medium such as steam at a heating steam pressure of about 2 to 40 bar in 3 to 30 seconds of heating time to cause fusion between the polypropylene resin pre-expanded particles, cooling the mold with water to a level that can suppress deformation of the in-mold foamed article after the in-mold foamed article is taken out from the mold, and opening the mold to obtain the in-mold foamed article.

The resulting products show excellent flame resistance and remarkable mechanical strength in view of their very low density. Therefore they can be suitably used in various fields, particularly in a field which requires a flame resistance or self-extinguishing property, e.g. automobile parts, plastic parts in devices and appliances and building materials.

**Reference EXAMPLES 1 to 7 and Comparative Examples 1 to 4**

An ethylene-propylene random copolymer (ethylene content 2.2% by weight, MI 8.0 g/lOmin) was mixed with PAC or carbon black in amounts shown in table 1. The median particle size of the porous activated carbon used here was about 3 $\mu$m and the internal surface area was about 1000 $m^2/g$. The resulting mixture was kneaded by a twin-screw extruder and formed into resin particles having a weight of 1.2 mg/particle. The melting point of the obtained resin particles was 159.0°C.

A 10 liter pressure vessel was charged with 100 parts of the resin particles, blowing agent in amount shown in table 1 and a dispersion medium (150 parts of water containing 1.3 parts of powdery basic calcium tertiary phosphate and 0.02 parts of sodium n-paraffinsulfonate). The resulting aqueous dispersion was heated to an expansion temperature, shown in table 1. The pressure inside the vessel was then adjusted to a prescribed expansion within the range of 18 - 32 bar introducing blowing agent to the vessel. A valve provided at a lower part of the pressure vessel was opened and, while maintaining the pressure inside the vessel at that pressure by introducing a nitrogen gas, the aqueous dispersion was released into the atmosphere through an orifice plate having openings of 4.5 mm diameter to give pre-expanded particles. The pre-expanded particles were evaluated. The pre-expanded particles were placed in a pressure vessel and compressed by air pressure, and the compressed particles were filled in a mold having a size of 370 × 370 × 60 mm at a compression rate of at least 10 %. The particles were then heated for 20 seconds with steam of 1.5 to 3.5 bar to fuse them together. The obtained in-mold foamed article was evaluated.

The results are shown in table 1. As the reference Examples 1 - 7 and Comparative Examples 1 - 4 show, the incorporation of PAC to pre-expanded polyolefin beads surprisingly improves the flame retardance of the molded article obtained from the beads.

**EXAMPLES 8 to 10 and Comparative Examples 5 to 8**

An ethylene-propylene random copolymer (ethylene content 2.2% by weight, MI 8.0 g/10min) was mixed with PAC and a sterically hindered amine ether flame retardant (trade mark "FLAMSTAB NOR116" made by Ciba Specialty Chemicals)) of the formula (3) :

$$RNHCH_2CH_2CH_2NRCH_2CH_2NCH_2CH_2CH_2NHR \qquad (3)$$

wherein R is a group of the formula :

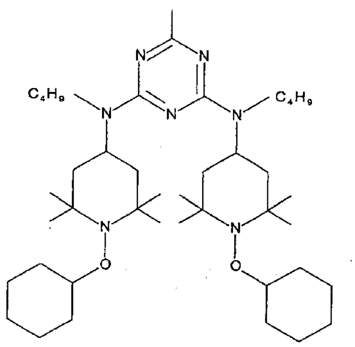

and another commercially available flame retardant except PAC and the sterically hindered amine ether flame retardant, and carbon black in amounts shown in table 2, and nucleating additive, anti-oxidant and UV absorber. The median particle size of the porous activated carbon used here was about 3 μm and the internal surface area was about 1000 $m^2/g$. The resulting mixture was kneaded by a twin-screw extruder and formed into resin particles having a weight of 1.2 mg/particle. The melting point of the obtained resin particles was 159.0°C.

A 10 litre pressure vessel was charged with 100 parts of the resin particles, blowing agent in amount shown in table 2 and a dispersion medium (150 parts of water containing 1.3 parts of powdery basic calcium tertiary phosphate and 0.02 parts of sodium n-paraffinsulfonate). The resulting aqueous dispersion was heated to an expansion temperature, shown in table 2. The pressure inside the vessel was then adjusted to a prescribed expansion within the range of 18 - 32 bar introducing blowing agent to the vessel. A valve provided at a lower part of the pressure vessel was opened and, while maintaining the pressure inside the vessel at that pressure by introducing a nitrogen gas, the aqueous dispersion was released into the atmosphere through an orifice plate having openings of 4.5 mm diameter to give pre-expanded particles. The pre-expanded particles were evaluated and the results are shown in table 2.

The pre-expanded particles were placed in a pressure vessel and compressed by air pressure, and the compressed particles were filled in a mold having a size of 370 × 370 × 60 mm at a compression rate of at least 10 %. The particles were then heated for 20 seconds with steam of 1.5 to 3.5 bar to fuse them together.

The obtained in-mold foamed article was evaluated and the results are in shown in table 3. As the Examples 8 - 10 and Comparative Examples 5 - 8 show, the incorporation of PAC and the sterically hindered amine ether flame retardant to pre-expanded polyolefin beads enables the molded article thereof to have greater than expected flame resistance compared with the use of PAC or the sterically hindered amine ether flame retardant alone.

**METHODS OF EVALUATION**

Bulk density of pre-expanded foam particles

A container with a volume V1 of 10 litres (L) was filled with dried pre-expanded particles, and the weight W1 (g) of the particles was exactly measured. The bulk density D (g/L) of the pre-expanded particles was calculated according to the following equation :

$$D = W1/V1 = W1/10.$$

Density of in-mold foamed articles

The apparent density MD (g/L) of the in-mold foamed article shown in table 2 was calculated by dividing the weight W2 (g) of the foamed article by the volume V2 (L) of the foamed article :

$$MD = W2/V2$$

Horizontal Burning Rate

The Horizontal Burning Rate was measured in accordance with ISO 3795.
5 specimens were cut away from an in-mold foamed article, with sizes of 356 mm x 75 mm x 13 mm and leaving the skin layer on the surface of 356 mm x 75 mm. This set of 5 specimens was preconditioned for minimum 24 hours and maximum 7 days, at 23±2°C and 50±5% relative humidity until immediately prior to testing. At the start of the test a burner supplied with propane gas was ignited and the height of the flame was adjusted to 38 mm. The skinned surface was exposed downwards to the flame during 15 seconds while the flame was applied at one end of the sample. The measurement of the burning time BT (sec) started at the moment when the foot of the flame passed the first measuring point at 38 mm from the end of the specimen where the flame was applied. It stopped when the flame reached the last measuring point at 38 mm from the other end of the specimen or when the flame extinguished before reaching this measuring point. The burnt distance BD (in mm) was 254 mm when the flame reached the last measuring point or was measured from the first measuring point up to the point where the flame extinguished.

The Horizontal Burning Rate, expressed in mm/min, was calculated according to the following equation :

$$HBR = BD/BT \times 60$$

However the ISO 3795 standard specifies that insofar the specimen did not ignite or when the flame extinguished before reaching the first measuring point so that no burning time BT was measured, the burning rate is 0 mm/min. Typically this occurs for in-mold foamed articles having a molded density below 20 g/l.
The maximum value of each set was evaluated.
Typically the burning rate of an in-mold foamed article based upon pre-expanded polyolefin particles, is inversely proportional to the molded density of the in-mold foamed article, provided that the specimen ignited and that the flame did not extinguish before the first measuring point.

Damaged length in horizontal burning conditions

The damaged length in horizontal burning conditions was measured in accordance with the "Horizontal Burning Foamed Material Test" cited in paragraph 12 of the UL94 standard.
10 specimens were cut away from an in-mold foamed article, with sizes of 150 mm x 50 mm x 13 mm, leaving the skin layer on the surface of 150 mm x 50 mm. According to UL94, a set of 5 specimens was preconditioned in accordance with ASTM D 618 during minimum 48 hours at 23±2°C and 50±5% relative humidity, and a set of 5 specimens was preconditioned in an air-circulating oven for 168 hours at 70±1°C and then cooled in the desiccator for at least 4 hours at room temperature. The former corresponds to standard condition and the latter simulates aging effect.
At the start of the test a burner supplied with methane gas and equipped with a wing tip was ignited and the height of the flame was adjusted to 38 mm. The skinned surface was exposed downwards to the flame during 60 seconds while the flame was applied at one end of the sample. For each individual specimen the damaged length, expressed in mm, was measured from the end of the specimen which was exposed to the flame up till where the flaming stopped or up to the 125 mm gauge mark if this mark was reached. The average and maximum value of each set were evaluated.

**Table 1**

| | **Additive (parts by total weight)** | | **Expansion temperature** | **Blowing agent** | | **Pre-expanded particles** | **In-mold foamed article** | |
|---|---|---|---|---|---|---|---|---|
| | PAC | Carbon black | (°C) | Type | Parts by weight per 100 parts of resin particles | Bulk density (g/L) | Density (g/L) | Horizontal Burning rate (mm/min) |
| Ref. Ex. 1 | 1.8 | 0 | 146.0 | Iso-butane | 8 | 21 | 50 | 41 |
| Ref. Ex. 2 | 1.8 | 0 | 157.0 | Air | 1 | 32 | 61 | 39 |
| Ref. Ex. 3 | 2.7 | 0 | 147.0 | Iso-butane | 7 | 24 | 34 | 0 |
| Ref. Ex. 4 | 2.7 | 0 | 157.5 | Air | 1 | 30 | 50 | 39 |
| Ref. Ex. 5 | 4.0 | 0 | 146.0 | Iso-butane | 9 | 17 | 28 | 0 |
| Ref. Ex. 6 | 4.0 | 0 | 154.0 | $CO_2$ | 5 | 25 | 52 | 40 |
| Ref. Ex. 7 | 7.0 | 0 | 147.0 | Iso-butane | 7 | 25 | 52 | 40 |
| Comp. Ex. 1 | 0 | 0 | 145.0 | Iso-butane | 10 | 17 | 34 | 75 |
| Comp. Ex. 2 | 0 | 0 | 147.0 | Iso-butane | 7 | 26 | 49 | 52 |
| Comp. Ex. 3 | 0 | 2.5 | 145.0 | Iso-butane | 9 | 17 | 28 | 90 |
| Comp. Ex. 4 | 0 | 2.5 | 157.0 | Air | 1 | 38 | 53 | 61 |

**Table 2 : Properties of expanded particle**

| | Additive (parts by total weight) | | | | Expansion temperature | Blowing agent | | Pre-expanded particles |
|---|---|---|---|---|---|---|---|---|
| | Sterically hindered amine ether | PAC | Flame Retardant | Carbon Black | (°C) | Type | Parts by weight per 100 parts of resin particles | Bulk density (g/L) |
| Ex. 8 | 3.0 | 2.2 | - | - | 157.0 | Air | 1 | 22 |
| Ex. 9 | 2.0 | 2.2 | 3.0 | - | 157.0 | Air | 1 | 24 |
| Ex. 10 | 2.0 | 1.5 | 3.0 | 0.35 | 146.0 | Iso-butane | 9 | 17 |
| Comp. Ex. 5 | 3.0 | - | - | - | 145.0 | Iso-butane | 10 | 18 |
| Comp. Ex. 6 | 3.0 | - | - | 0.35 | 146.0 | Iso-butane | 8 | 22 |
| Comp. Ex. 7 | - | 2.2 | - | - | 146.0 | Iso-butane | 9 | 17 |
| Comp. Ex. 8 | - | 2.2 | 3.0 | - | 154.0 | $CO_2$ | 5 | 25 |

**Table 3 : Properties of in-mold foamed article**

| | **Additive (parts by total weight)** | | | | **Density** | **Flame resistance : damaged length (mm)** | | | |
|---|---|---|---|---|---|---|---|---|---|
| | | | | | | Precond. : 48 hours @ 23°C / 50%RH | | Precond. : 168 hours @ 70°C | |
| | Sterically hindered amine ether | PAC | Flame Retardant | Carbon Black | (g/L) | Average | Maximum | Average | Maximum |
| Ex. 8 | 3.0 | 2.2 | - | - | 45 | 64 | 90 | 64 | 104 |
| Ex. 9 | 2.0 | 2.2 | 3.0 | - | 47 | 35 | 40 | 38 | 55 |
| Ex. 10 | 2.0 | 1.5 | 3.0 | 0.35 | 36 | 35 | 44 | 37 | 45 |
| Comp. Ex. 5 | 3.0 | - | - | - | 35 | 76 | 118 | 104 | 125 |
| Comp. Ex. 6 | 3.0 | - | - | 0.35 | 43 | 109 | 125 | 113 | 125 |
| Comp. Ex. 7 | - | 2.2 | - | - | 31 | 125 | 125 | 125 | 125 |
| Comp. Ex. 8 | - | 2.2 | 3.0 | - | 45 | 125 | 125 | 125 | 125 |

## Claims

1. Pre-expanded polyolefin particle containing powdered activated carbon (PAC) and further comprising a sterically hindered amine ether flame retardant.

2. Pre-expanded polyolefin particle according to claim 1, wherein the pre-expanded polyolefin particle has a density of from 10 to 200 g/L.

3. Pre-expanded polyolefin particle according to claim 1 or 2, wherein the powdered activated carbon has a median particle size of 1 - 10 $\mu$m.

4. Pre-expanded polyolefin particle according to any of claims 1 to 3, in which the amount of powdered activated carbon (PAC) is between 0.1 to 15 % by weight, with respect to 100% by weight of the total components.

5. Pre-expanded polyolefin particle according to any one of claims 1 to 4, wherein said sterically hindered amine ether flame retardant is a compound of the formula (1) :

$$R^1NHCH_2\,CH_2\,CH_2NR^2\,CH_2\,CH_2\,NR^3\,CH_2\,CH_2\,CH_2NHR^4 \qquad (1)$$

wherein $R^1$ and $R^2$ are an s-triazine moiety T of the formula (2) :

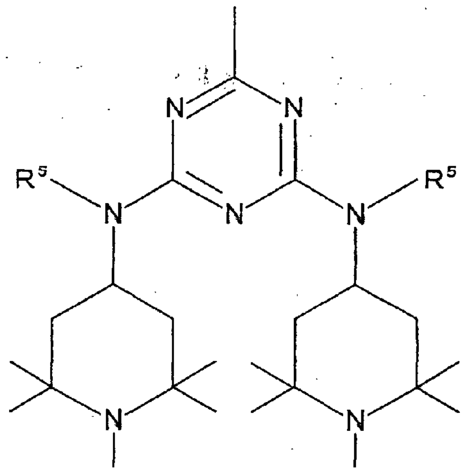

(2)

in which $R^5$ is an alkyl group having 1 to 12 carbons and $R^6$ is a methyl group, cyclohexyl group or octyl group; and either one of R3 and R4 is the s-triazine moiety T represented by the formula (2) and the other is a hydrogen atom.

6. The pre-expanded polyolefin particle according to any of claims 1 to 5, in which the amount of said flame retardant is from 0.01 to 20 % by weight, with respect to 100% by weight of the total components.

7. Pre-expanded polyolefin particle according to any of claims 1 to 6, wherein the polyolefin is selected from polypropylene, polyethylene, or ethylene - propylene copolymers.

8. Process for producing a pre-expanded polyolefin product according to any of claims 1 to 7 comprising the steps of:

   (b) providing polyolefin polymer granules comprising a sterically hindered amine ether flame retardant and powdered activated carbon;
   (c) impregnating said polyolefin polymer granules comprising powdered activated carbon with a volatile blowing agent in an aqueous suspension at a pressure of 5 to 50 bar and at temperatures of 100 to 170°C; and
   (d) decompression to atmospheric pressure.

9. Process for producing an expanded polyolefin product comprising the melting of polyolefin granules with powdered activated carbon in an extruder to provide a polyolefin material containing powdered activated carbon, which is converted into granules, followed by the use of the granules thus obtained in the process of claim 8.

10. Molded article prepared by in-mold forming of pre-expanded polyolefin particles according to any of claims 1 to 7 and/or prepared by the process of claims 8 to 9.

## Patentansprüche

1. Vor-expandiertes Polyolefinteilchen, das pulverförmige Aktivkohle (PAC) enthält und weiterhin ein sterisch gehindertes Aminether-Flammschutzmittel enthält.

2. Vor-expandiertes Polyolefinteilchen nach Anspruch 1, wobei das vorexpandierte Polyolefinteilchen eine Dichte von 10 bis 200 g/L aufweist.

3. Vor-expandiertes Polyolefinteilchen nach Anspruch 1 oder 2, wobei die pulverförmige Aktivkohle eine mittlere Teilchengröße von 1 - 10 μm aufweist.

4. Vor-expandiertes Polyolefinteilchen nach einem der Ansprüche 1 bis 3, wobei die Menge an pulverförmiger Aktivkohle (PAC) zwischen 0,1 und 15 Gew.-%, bezogen auf 100 Gew.-% der gesamten Komponenten, liegt.

5. Vor-expandiertes Polyolefinteilchen nach einem der Ansprüche 1 bis 4, wobei das sterisch gehinderte Aminether-Flammschutzmittel eine Verbindung der Formel (1) ist:

$$R^1NHCH_2\,CH_2\,CH_2NR^2\,CH_2\,CH_2\,NR^3\,CH_2\,CH_2\,CH_2NHR^4 \qquad (1)$$

wobei R1 und R2 ein s-Triazinrest T der Formel (2) sind:

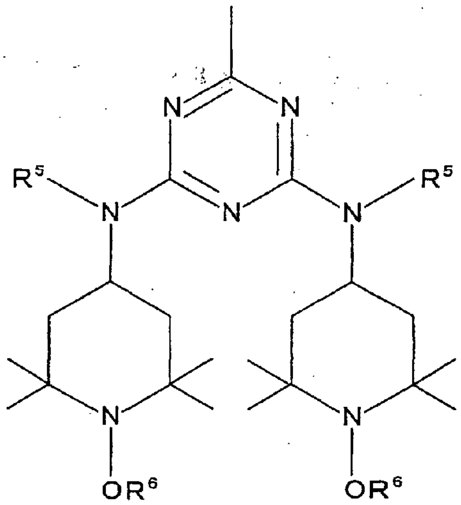

(2)

wobei $R^5$ eine Alkylgruppe mit 1 bis 12 Kohlenstoffatomen ist und $R^6$ eine Methylgruppe, eine Cyclohexylgruppe oder eine Octylgruppe ist; und einer der Reste $R^3$ und $R^4$ der s-Triazinrest T der Formel (2) ist und der andere ein Wasserstoffatom ist.

6. Vor-expandiertes Polyolefinteilchen nach einem der Ansprüche 1 bis 5, wobei die Menge des Flammschutzmittels 0,01 bis 20 Gew.-%, bezogen auf 100 Gew.-% der Gesamtkomponenten, beträgt.

7. Vor-expandiertes Polyolefinteilchen nach einem der Ansprüche 1 bis 6, wobei das Polyolefin aus Polypropylen, Polyethylen oder Ethylen-Propylen-Copolymeren ausgewählt ist.

8. Verfahren zur Herstellung eines vor-expandierten Polyolefinprodukts nach einem der Ansprüche 1 bis 7, umfassend die Schritte:

(b) Bereitstellen von Polyolefinpolymergranulaten, die ein sterisch gehindertes Aminether-Flammschutzmittel und pulverförmige Aktivkohle umfassen;

(c) Imprägnieren der Polyolefinpolymergranulate, die pulverförmige Aktivkohle umfassen, mit einem flüchtigen Treibmittel in einer wässrigen Suspension bei einem Druck von 5 bis 50 bar und bei Temperaturen von 100 bis 170°C; und
d) Dekompression auf Atmosphärendruck.

**9.** Verfahren zur Herstellung eines expandierten Polyolefinprodukts, umfassend das Schmelzen von Polyolefingranulaten mit pulverförmiger Aktivkohle in einem Extruder, um ein Polyolefinmaterial bereitzustellen, das pulverisierte Aktivkohle enthält, welches in Granulate umgewandelt wird, gefolgt von der Verwendung des so erhaltenen Granulats im Verfahren nach Anspruch 8.

**10.** Formkörper, hergestellt durch In-Mold-Formen von vor-expandierten Polyolefinteilchen nach einem der Ansprüche 1 bis 7 und/oder hergestellt durch das Verfahren nach Ansprüchen 8 bis 9.

## Revendications

**1.** Particule de polyoléfine pré-expansée contenant du charbon activé en poudre (PAC) et comprenant en outre un retardant de flamme à l'éther d'amine à empêchement stérique.

**2.** Particule de polyoléfine pré-expansée selon la revendication 1, dans laquelle la particule de polyoléfine pré-expansée a une densité de 10 à 200 g/litre.

**3.** Particule de polyoléfine pré-expansée selon la revendication 1 ou 2, dans laquelle le charbon activé en poudre a une taille médiane de particule de 1 à 10 $\mu$m.

**4.** Particule de polyoléfine pré-expansée selon l'une quelconque des revendications 1 à 3, dans laquelle la quantité de charbon activé en poudre (PAC) est comprise entre 0,1 et 15 % en poids, par rapport à 100 % en poids des composants totaux.

**5.** Particule de polyoléfine pré-expansée selon l'une quelconque des revendications 1 à 4, dans laquelle ledit retardant de flamme à l'éther d'amine à empêchement stérique est un composé de formule (1) :

$$R^1NHCH_2\,CH_2\,CH_2NR^2\,CH_2\,CH_2\,NR^3\,CH_2\,CH_2\,CH_2NHR^4 \qquad (1)$$

dans laquelle $R^1$ et $R^2$ sont une fraction s-triazine T de formule (2) :

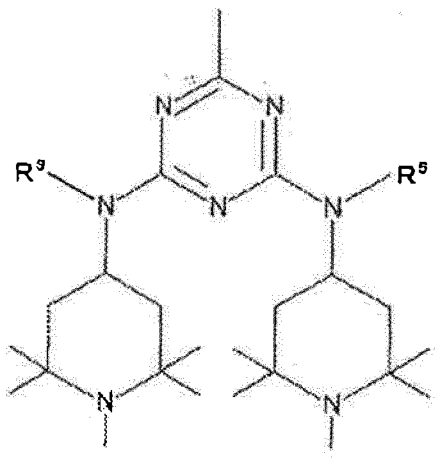

(2)

dans laquelle $R^5$ est un groupe alkyle ayant 1 à 12 atomes de carbone et $R^6$ est un groupe méthyle, un groupe cyclohexyle ou un groupe octyle ; et un ou l'autre parmi $R^3$ et $R^4$ est la fraction s-triazine T représentée par la formule (2) et l'autre est un atome d'hydrogène.

**6.** Particule de polyoléfine pré-expansée selon l'une quelconque des revendications 1 à 5, dans laquelle la quantité dudit retardant de flamme va de 0,01 à 20 % en poids, par rapport à 100 % en poids des composants totaux.

7. Particule de polyoléfine pré-expansée selon l'une quelconque des revendications 1 à 6, dans laquelle la polyoléfine est choisie parmi le polypropylène, le polyéthylène ou les copolymères d'éthylène - propylène.

8. Procédé de production d'un produit de polyoléfine pré-expansée selon l'une quelconque des revendications 1 à 7, comprenant les étapes de :

(b) fourniture de granules de polymère de polyoléfine comprenant un retardant de flamme à l'éther d'amine à empêchement stérique et du charbon activé en poudre ;
(c) imprégnation desdits granules de polymère de polyoléfine comprenant du charbon activé en poudre avec un agent de foisonnement volatil dans une suspension aqueuse à une pression de 5 à 50 bar et à des températures de 100 à 170 °C ; et
(d) décompression jusqu'à pression atmosphérique.

9. Procédé de production d'un produit de polyoléfine pré-expansée comprenant la fusion des granules de polyoléfine avec du charbon activé en poudre dans une extrudeuse afin de donner un matériau de polyoléfine contenant du charbon activé en poudre, qui est converti en granules, suivie de l'utilisation des granules ainsi obtenus dans le procédé selon la revendication 8.

10. Article moulé préparé par la formation en moule de particules de polyoléfine pré-expansée selon l'une quelconque des revendications 1 à 7 et/ou préparé par le procédé des revendications 8 à 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3269029 A
- JP 5331310 A
- JP 7238178 A
- JP 4363341 A
- JP 6192465 A
- JP 7309967 A
- JP 10147661 A
- JP 9227711 A
- JP 2002179830 A
- US 6429234 B2
- US 2004171708 A1
- US 2003105195 A1
- JP 56055478 A
- JP 2006063340 A
- JP 2010174080 A
- WO 2003048239 A
- US 6822023 B
- JP 2003053333 B
- US 61378149 B